# EUROPÄISCHE PATENTANMELDUNG

(11) **EP 0 674 141 A2**
(43) Veröffentlichungstag der Anmeldung: **27.09.1995**
(21) Anmeldenummer: 95104305.8
(22) Anmeldetag: 23.03.1995
(51) Int. Cl.: F24J 2/04, F24J 2/46

(54) **Sonnenkollektor-Rahmenverblendung**

(30) Priorität: 25.03.1994 DE 4410493
(71) Anmelder: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(57) **Zusammenfassung**

Eine Sonnenkollektor-Rahmenverblendung mit einem Kollektorgehäuse (10) und einem Dacheindeckrahmen (12) zur wasserdichten Montage des Solarkollektors in bzw. auf einem Dach ist mit einem Dacheindeckrahmen (12) versehen, der eine Ausbauchung (26) aufweist, um eine Rohrleitung (14) aufzunehmen, in der eine Wärmeträgerflüssigkeit strömt. Der Dacheindeckrahmen nimmt auch wärmeisolierendes Material 28 auf.

## Beschreibung

Die Erfindung betrifft eine Sonnenkollektor-Rahmenverblendung mit einem Kollektorgehäuse, einem Dacheindeckrahmen zur wasserdichten Montage des Solarkollektors in einem Dach und mit einer sich parallel zu einer Wand des Kollektorgehäuses erstreckenden Rohrleitung zum Fördern einer Wärmeträgerflüssigkeit in das oder aus dem Kollektorgehäuse.

Der vorstehend genannte Sonnenkollektor (Solarkollektor) ist in das Dach integriert, ähnlich wie ein Dachfenster. Mit anderen Worten, der Solarkollektor ist bei einem Ziegeldach anstelle von Ziegeln in das Dach eingebaut. Diese Konstruktion wird auch als "Inziegel"-Montage bezeichnet.

Die Erfindung betrifft aber auch die sogenannte "Aufziegel-Montage" von Solarkollektoren, bei denen das Kollektorgehäuse nicht in, sondern auf einem Dach montiert ist, d. h. bei Verwendung von Ziegeln verbleibt die durchgehende Ziegelfläche und das Kollektorgehäuse wird darüber montiert.

Ein wichtiger Gesichtspunkt beim Einsatz von Solarkollektoren ist Ihre architektonische Wirkung im Rahmen des Daches eines Hauses. Die oben genannte "Inziegel"-Montage ist im allgemeinen architektonisch ansprechender als die "Aufziegel"-Montage, bei der die Solarkollektoren häufig wie Fremdkörper auf dem Gebäude wirken.

Üblicherweise werden mehrere Kollektorgehäuse neben- oder übereinander auf einem Dach montiert. Die Wärmeträgerflüssigkeit zirkuliert durch Rohrleitungen von einer Wärmeabnahmestelle (üblicherweise im Keller des Hauses) zum Kollektorfeld und wieder zurück zur Wärmeabnahmestelle. Diese zumindest zwei Rohrleitungen werden üblicherweise als Vor- bzw. Rücklauf bezeichnet. Darüber hinaus müssen die einzelnen Kollektorgehäuse des Feldes auch untereinander mit Rohren verbunden werden.

Dacheindeckrahmen zum wasserdichten Einbau von Kollektorgehäusen auf bzw. in einem Dach sind bekannt, vgl. insbesondere DE 42 01 489 A1 und DE 41 34 394 A1.

Beim Stand der Technik von "Aufziegel"-Kollektoren (also nicht in ein Ziegeldach integrierten Kollektorgehäusen, sondern über den Ziegeln montierten Kollektorgehäusen) verlaufen die Rohrleitungen und insbesondere die Vor- und Rückläufe für die Wärmeträgerflüssigkeit über der Ziegelfläche und werden an geeigneter Stelle durch die Ziegelfläche hindurch in das Hausinnere geführt. Dies stört häufig nicht nur den ästhetischen Eindruck der Solarkollektoranlage auf dem Dach, sondern führt auch zu technischen Problemen. Die Wärmeträgerflüssigkeit führenden Rohrleitungen müssen sorgfältig gegen Wärmeverluste isoliert werden. Dies ist sehr aufwendig hinsichtlich Material und Arbeitskosten. Insbesondere ist diese Wärmeisolierung unter den gegebenen Umständen des Standes der Technik schwierig, weil die üblichen, kostengünstigen Isoliermaterialien nicht UV- und auch nur wenig witterungsbeständig sind. Sie müssen deshalb mit einer sehr teuren Blechummantelung versehen werden, die häufig aus nichteloxiertem Aluminium oder verzinktem Blech besteht. Nimmt das Isolationsmaterial Feuchtigkeit auf, so wird in der Regel auch die Wärmedämmung beeinträchtigt.

Auch bei der sogenannten "Inziegel"-Montage von Solarkollektoren ist der Stand der Technik mit Blick auf die ästhetische Wirkung des Kollektorfeldes, den Aufwand an Material und Montagearbeit sowie auch hinsichtlich der Wärmeisolierung und des Platzbedarfes verbesserungsfähig.

Bei der "Inziegel"-Montage werden die Rohre meist außerhalb der Kollektorgehäuse geführt, vor allem dann, wenn die Kollektorgehäuse nebeneinander (und nicht übereinander) in das Dach integriert werden. Während bei der oben erwähnten "Aufziegel"-Montage die Rohrleitungen weitgehend innerhalb der Kollektorgehäuse (durch die Gehäuse hindurch) geführt werden, sind also bei einer "Inziegel"-Montage üblicherweise noch mehr Rohrleitungsstrecken außerhalb der Gehäuse, was die oben bereits erläuterten Probleme aufwirft.

Bei einer "Inziegel"-Montage ist die wasserdichte Verbindung vom oberen Teil des Dacheindeckrahmens zum Kollektorgehäuse besonders problematisch, da der Regen über ein etwa waagerecht verlaufendes Verbindungsblech zum Kollektorgehäuse läuft und dort dann, wenn das Verbindungsblech nicht sorgfältig abdichtend mit dem Kollektorgehäuse verbunden ist, Wasser zwischen das Blech und den Rahmen dringen kann.

Bei der z. Z. aus architektonisch-ästhetischen Gründen weitgehend vorgezogenen "Inziegel"-Montage müssen die Rohrleitungen (Vor- und Rücklauf) sowohl an der Unterseite des Kollektorfeldes als auch an der Oberseite des Kollektorfeldes durch das Dach geführt werden. Dies kann dann Probleme aufwerfen, wenn der unter den Ziegeln liegende Dachraum zu einem Wohnraum ausgebaut ist und eine Rohrleitung nur mit hohem Renovierungsaufwand verlegt werden kann.

Aufgrund der vorstehend geschilderten Umstände ist es also üblich, bei sogenannten "Aufziegel"-Kollektoren innenliegende Verteilerleitungen vorzusehen, während bei "Inziegel"-Kollektoren die Verteilerleitungen weitgehend außerhalb der Kollektorgehäuse verlaufen. Somit werden im Stand der Technik für zwei verschiedene Kollektortypen, welche ansonsten die gleiche technische Aufgabe haben, nämlich die Energiegewinnung, zwei verschiedene Kollektorgehäusekonstruktionen vorgesehen, was den Herstellungsaufwand, die Lagerhaltung und letztlich auch den Preis nachteilig beeinflußt.

Die DE 27 24 314 A1 beschreibt ein sonnenbeheiztes Schindeldach. Dieser Stand der Technik betrifft keine Solarkollektoren mit einem Kollektorgehäuse im Sinne der vorliegenden Anmeldung. Gemäß der Fig. 7 der DE 27 24 314 wird in einem Rohr Wärmeträgerflüssigkeit geführt, die über eine Einlaßsammelleitung zu den einzelnen Schindeln strömt, wobei die Schindeln jweils so miteinander verbunden sind, daß die Wärmeträgerflüssigkeit durch die Schindeln strömen kann. Die Schindeln sind also als Hohlkörper ausgebildet. Ein derartiges sonnenbeheiztes Schindeldach ist im Aufbau grundsätzlich verschieden von einem Solarkollektor mit einem Kollektorgehäuse.

Die DE 28 29 281 A1 beschreibt, insbesondere in Fig. 59, einen Solarkollektor mit einem Kollektorgehäuse, wobei eine Heißwasserleitung firstseitig oberhalb des Kollektorgehäuses geführt ist, also nicht links bzw. rechts neben dem Kollektorgehäuse (bezogen auf den Einbau des Kollektorgehäuses in einem Schrägdach), worum es bei der vorliegenden Erfindung vor allem geht.

Das DE 93 03 883 U1 beschreibt ein Sparren- und Pfostenprofil für Wintergärten und Fassadenkonstruktionen mit einem Glasaufnahmeprofil, welches auf einer Seite mit einer Glasscheibe und auf der anderen Seite mit einem Funktionsprofil verbunden ist.

Der Erfindung liegt die Aufgabe zugrunde, Solarkollektoren der eingangs genannten Art so auszugestalten, daß mit möglichst geringem Herstellungs- und Montageaufwand eine ästhetisch ansprechende Eingliederung von Solarkollektoren in ein Dach möglich ist, wobei auch eine sichere und wirkungsvolle Wärmeisolation der Flüssigkeit führenden Rohrleitungen gewährleistet sein soll.

Die erfindungsgemäße Lösung dieser Aufgabe für sogenannte "Inziegel"-Kollektoren ist im Patentanspruch 1 gekennzeichnet, während der Anspruch 2 die Lösung für sogenannte "Aufziegel"-Kollektoren beschreibt.

Ein besonderer mit der Erfindung erzielter Vorteil besteht darin, daß sowohl für die "Inziegel"-Montage als auch für die "Aufziegel"-Montage jeweils die gleichen Kollektorgehäuse verwendet werden können.

Erfindungsgemäß sind also die eine Wärmeträgerflüssigkeit führenden Leitungen direkt neben der linken und/oder rechten Seitenwand des Kollektorgehäuses geführt. Die Begriffe "links" und "rechts" sowie "Seitenwand" beziehen sich auf den üblichen Einbauzustand des Kollektorgehäuses, bezogen auf das Dach. Entsprechend bedeutet "oben" bzw. "unten" eine Anordnung vertikal oberhalb bzw. unterhalb der Oberkante bzw. Unterkante des Kollektorgehäuses, wiederum bezogen auf den üblichen Einbauzustand des Kollektorgehäuses in einem schrägen Dach. Bei der vorliegenden Erfindung geht es um die Lösung der technischen Probleme, die sich daraus ergeben, daß Wärmeträgerflüssigkeit führende Rohrleitungen links bzw. rechts in Bezug auf das Kollektorgehäuse über das Dach oder auf dem Dach geführt werden müssen.

Vorteilhafte Ausgestaltungen beider Lösungsvarianten sind in den abhängigen Ansprüchen beschrieben.

Nachfolgend werden Ausführungsbeispiele erfindungsgemäßer Solarkollektoranlagen anhand der Zeichnung näher erläutert. Es zeigt:
- Fig. 1: einen Schnitt durch den Rand eines Kollektorgehäuses mit einem Dacheindeckrahmen bei "Inziegel"-Montage;
- Fig. 2: einen Schnitt durch ein Kollektorgehäuse und eine Rand-Verkleidung des Gehäuses bei sogenannter "Aufziegel"-Montage des Kollektorgehäuses;
- Fig. 3 bis 8: Einzelheiten der Befestigung eines Dacheindeckrahmens bzw. einer Verkleidung an einem Kollektorgehäuse;
- Fig. 9: eine wasserdichte Überbrückung zweier nebeneinander angeordneter Kollektorgehäuse;
- Fig. 10 bis 12: eine wasserdichte Verbindung zwischen zwei direkt nebeneinander angeordneten Kollektorgehäusen;
- Fig. 13: ein Detail aus Fig. 12 in vergrößertem Maßstab;
- Fig. 14: eine Randverkleidung für ein Kollektorgehäuse bei "Aufziegel"-Montage in perspektivischer Darstellung;
- Fig. 15: einen Schnitt durch eine Verkleidung gemäß Fig. 14;
- Fig. 16: eine Draufsicht auf zwei Kollektorgehäuse;
- Fig. 17: einen Schnitt durch die Anordnung gemäß Fig. 16;
- Fig. 18: eine Abwandlung des Ausführungsbeispieles gemäß Fig. 2;
- Fig. 19: ein abgewandeltes Detail des Ausführungsbeispieles gemäß Fig. 18;
- Fig. 20: ein weiteres abgewandeltes Detail der Ausführungsform gemäß Fig. 19;
- Fig. 21: eine weitere abgewandelte Ausführungsform des Beispieles gemäß Fig. 2; und
- Fig. 22: eine weitere abgewandelte Ausführungsform des Ausführungsbeispieles gemäß Fig. 1.

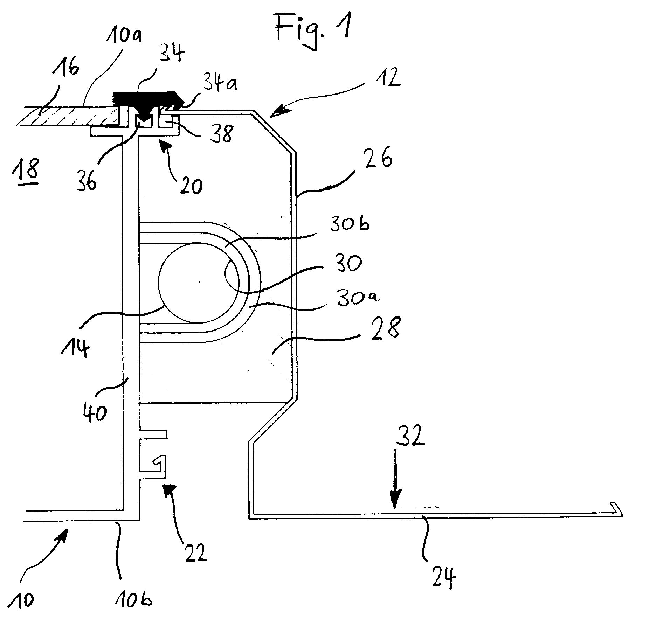

Fig. 1 zeigt einen Schnitt durch einen hier interessierenden Seitenbereich eines Kollektorgehäuses 10 mit einem Dacheindeckrahmen 12 zur "Inziegel"-Montage. Eine Rohrleitung 14, z. B. als Vor- oder Rücklauf für die Wärmeträgerflüssigkeit zu einem Kollektorfeld aus mehreren Kollektorgehäusen, erstreckt sich parallel zur vertikalen Seitenwand, also links oder rechts, des Kollektorgehäuses 10. In üblicher Weise deckt eine Glasscheibe 16 den Innenraum 18 des Kollektorgehäuses 10 ab.

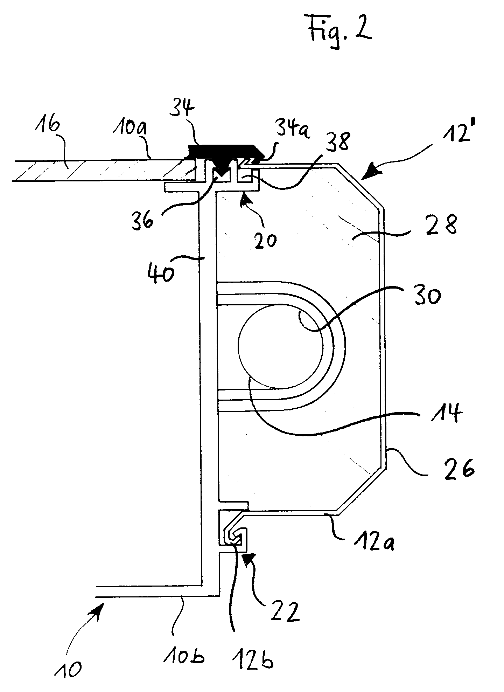

An einer Oberkante 10a des Kollektorgehäuses 10 ist gemäß Fig. 1 eine Einrichtung 20 zum Befestigen des Dacheindeckrahmens 12 angeordnet, die weiter unten näher beschrieben wird. Weiterhin weist das Kollektorgehäuse 10 nahe seiner Unterkante 10b eine weitere Einrichtung 22 auf, die beim Ausführungsbeispiel gemäß Fig. 1 nicht gebraucht wird, wohl aber beim Ausführungsbeispiel gemäß Fig. 2, was weiter unten näher beschrieben ist.

Beim "Inziegel"-Kollektorgehäuse gemäß Fig. 1 weist der Dacheindeckrahmen 12 ein sich parallel zur Dachebene erstreckendes Flachteil 24 auf, auf welches ein Dachziegel (nicht gezeigt) gelegt wird. Das Auflegen des Dachziegels ist durch den Pfeil 32 markiert.

Weiterhin weist der Dacheindeckrahmen 12 gemäß Fig. 1 eine Ausbauchung 26 auf, in der wärmeisolierendes Material 28 aufgenommen ist. Das wärmeisolierende Material, beispielsweise ein PU-Hartschaum, weist eine Ausnehmung 30 auf, in der die Rohrleitung 14 untergebracht ist. Um unterschiedliche Durchmesser der Rohrleitung 14 in einfacher Weise berücksichtigen zu können, sind wahlweise herausnehmbare Einsätze 30a, 30b vorgesehen, um die Abmessungen der Ausnehmung 30 an den Durchmesser der Rohrleitung 14 anpassen zu können.

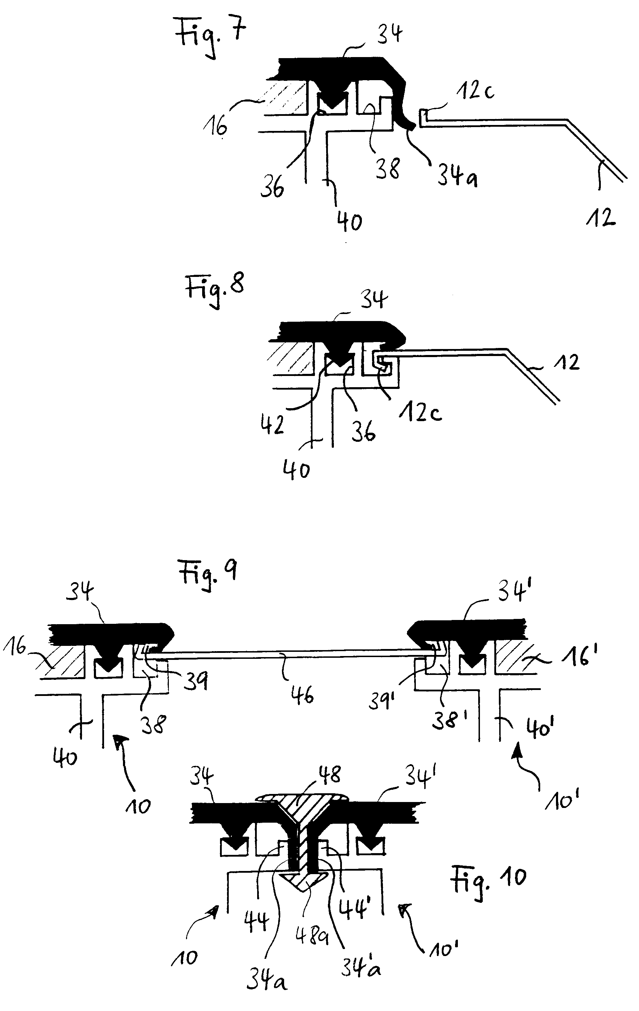

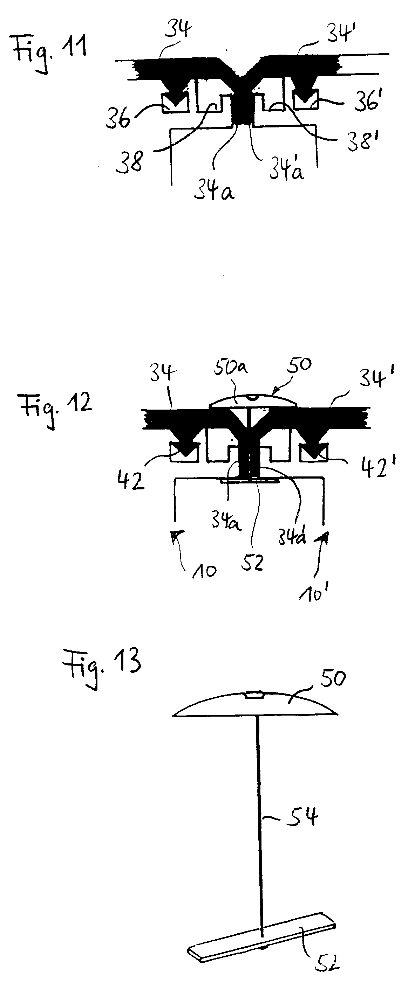

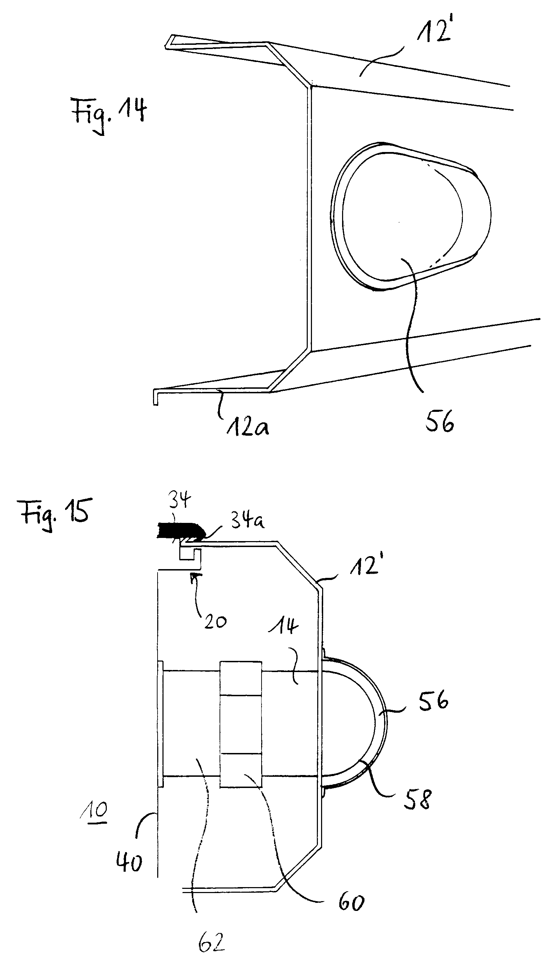

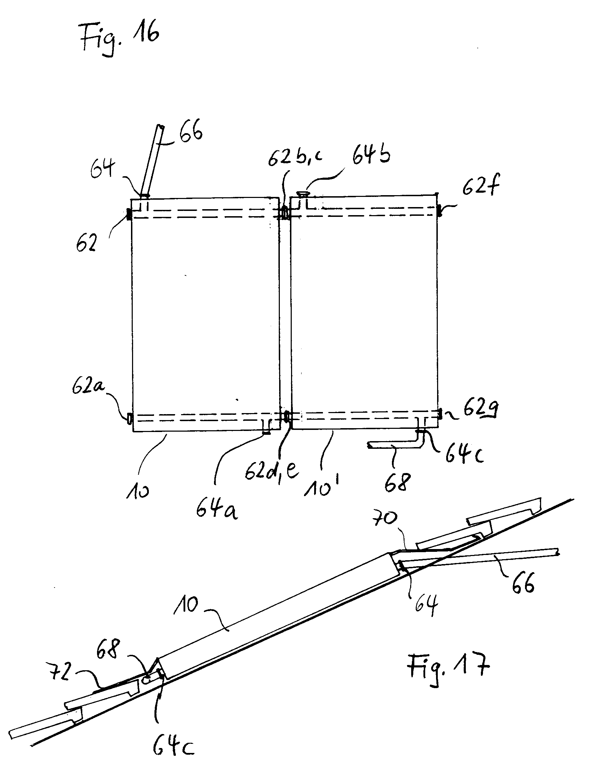

Ein Dichtungsstreifen 34 aus elastischem Material, beispielsweise Gummi, dichtet den Übergang vom Dacheindeckrahmen 12 zum Kollektorgehäuse 10 und darüber hinaus auch noch den Übergang von der Glasscheibe 16 zur Wand 40 des Kollektorgehäuses 10 ab. Der Dichtungsstreifen 34 greift mit einem widerhakenförmigen Vorsprung in eine Nut 36 und wird so dicht auf die Glasscheibe 16 bzw. die obere Kante des Dacheindeckrahmens 12 gespannt. Der Dacheindeckrahmen 12 greift mit einem hakenförmigen Ende (vgl. Fig. 4, 6) hinter einen elastischen Lappen 34a des Dichtungsstreifens 34, wobei unter der hierdurch gebildeten Dichtstelle eine Rille 38 außenseitig des Kollektorgehäuses 10 vorgesehen ist, um durchdringende Feuchtigkeit aufzunehmen und abzuleiten.

Fig. 2 zeigt eine Abwandlung des vorstehend beschriebenen Ausführungsbeispieles eines Kollektorgehäuses, wobei die Variante gemäß Fig. 2 für eine sogenannte "Aufziegel"-Montage geeignet ist. In den Figuren sind einander entsprechende oder funktionsgleiche Bauteile mit gleichen Bezugsziffern versehen. Beim Ausführungsbeispiel nach Fig. 2 ist der Dacheindeckrahmen 12 ersetzt durch eine Verkleidung 12', die hinsichtlich der Aufnahme der Rohrleitung 14 und des wärmeisolierenden Materials 18 funktionsgleich ist mit dem Dacheindeckrahmen 12 nach Fig. 1. Aufgrund der "Aufziegel"-Montage ist aber hier das Flachteil 24 weggelassen. Vielmehr weist die Verkleidung 12' einen Abschnitt 12a auf, der von der Ausbauchung 26 zurück zum Kollektorgehäuse 10 führt und dort mit einem hakenähnlichen Endstück 12b hinter einen hakenförmigen Rand der Befestigungseinrichtung 22 greift, wie in Fig. 2 im einzelnen dargestellt ist. Ansonsten versteht sich der Gegenstand gemäß Fig. 2 aufgrund der Beschreibung anhand der Fig. 1.

Aufgrund der Verwendung des beschriebenen Dichtungsstreifens 34 erübrigen sich separate Dichtbänder, Schraubverbindungen etc.

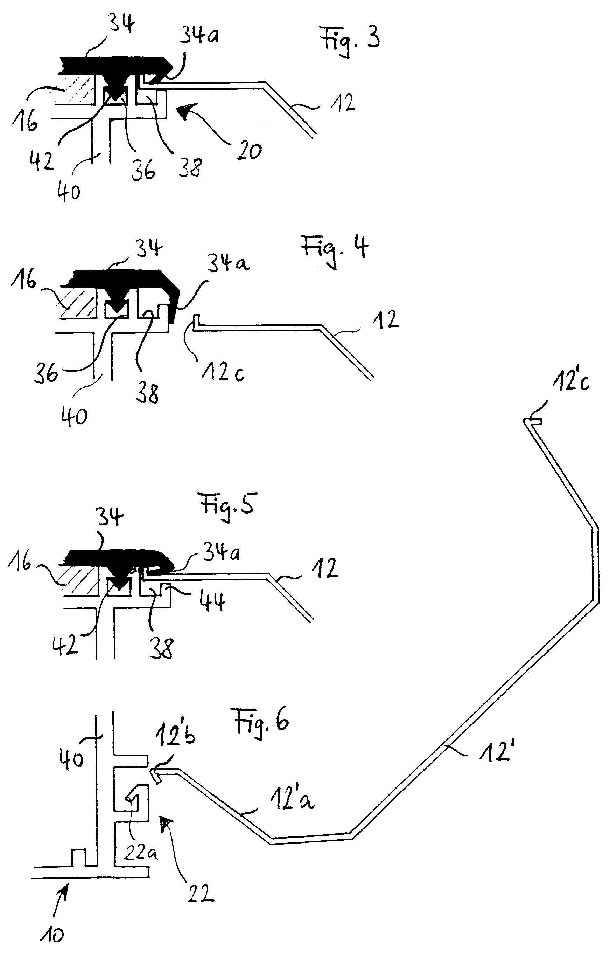

Fig. 3 zeigt die Abdichtung zwischen dem Dichtungsstreifen 34 und dem Dacheindeckrahmen 12 im einzelnen, wobei statt des Dacheindeckrahmens 12 auch analog die Verkleidung 12' (Fig. 2) eingesetzt sein kann. Fig. 4 zeigt die Bauteile, bevor der Dacheindeckrahmen 12 unter den Dichtungsstreifen 34 geschoben ist. Beim Einschieben des hakenförmigen Randes 12c des Dacheindeckrahmens 12 unter den Dichtungsstreifen 34 wird der Lappen 34a des Dichtungsstreifens nach innen gebogen und kommt in eine Position gemäß den Fig. 3 oder 5. Wie den Fig. 3 und 5 zu entnehmen ist, werden zwei abdichtende Berührungsstellen zwischen dem Dacheindeckrahmen 12 (aus Blech) und dem Dichtungsstreifen 34 (z. B. aus Gummi) gebildet, nämlich einmal dort, wo die Stirnkante des Lappens 34a auf die Oberfläche des Dacheindeckrahmens 12 gedrückt ist, und zum anderen dort, wo die Stirnkante des Hakens 12c des Dacheindeckrahmens 12 gegen die Innenfläche des Dichtungsstreifens 34 drückt. Auf diese Weise werden zwei Sammelrinnen für Feuchtigkeit gebildet, nämlich zum einen oberhalb des Dacheindeckrahmens 12 zwischen diesem und dem Dichtungsstreifen 34 und zum anderen unterhalb des Dacheindeckrahmens 12, nämlich zwischen diesem und der Auskragung an der Wand 40 des Kollektorgehäuses. Letzteres ist die Rinne 38.

Die andrückende Vorspannung zwischen den vorstehend genannten Dichtungsteilen wird durch den in die Nut 36 am Kollektorgehäuse dringenden, hakenförmigen Vorsprung 42 des Dichtungsstreifens 34 bewirkt, wobei der Vorsprung 42 eine Verengung an der Öffnung der Nut 42 hintergreift. Die von dem Dichtungsstreifen 34 erzeugte Vorspannung drückt den Dacheindeckrahmen 12 (oder analog die Verkleidung 12' gemäß Fig. 2) auf eine Wand 44 der Rinne 38.

Fig. 6 zeigt die Montage der Verkleidung 12' gemäß Fig. 2 an der Wand 40 des Kollektorgehäuses 10 mittels der Befestigungseinrichtung 22. Die Verkleidung 12' wird mit einem einen Haken bildenden ausgebördelten Rand 12b' hinter einen nach innen gerichteten Haken 22a der Befestigungseinrichtung geschoben, wobei die Vorspannkraft durch Verbiegen der aus Blech gebildeten Verkleidung 12' leicht von Hand erzeugt werden kann.

Die Fig. 7 und 8 zeigen Abwandlungen der zuvor anhand der Figuren 3 bis 5 beschriebenen Ausführungsbeispiele. Bei der Variante nach Fig. 7 ist der Lappen 34a des Dichtungsstreifens 34 im nicht-montierten Zustand nach außen gebogen, wodurch der Dacheindeckrahmen 12 (bzw. die Verkleidung 12' nach Fig. 2) leichter unter den Dichtungsstreifen 34 geschoben werden kann. Auch bewirkt der nach außen gebogene Teil des Lappens 34a aufgrund seiner eigenen Vorspannung nach der Montage eine gute Abdichtung.

Die Variante nach Fig. 8 versteht sich aus der Figur von selbst.

An der unteren Kante des Kollektorgehäuses sind im Dichtungsstreifen bzw. in der Rinne 38 Löcher vorgesehen, damit Wasser ablaufen kann. Da, wie vorstehend beschrieben, der Dacheindeckrahmen 12 beim Ausführungsbeispiel nach Fig. 1 bzw. die Verkleidung 12' beim Ausführungsbeispiel nach Fig. 2 das Kollektorgehäuse 10 jeweils vollständig abdecken und der Dichtungsstreifen 34 sowieso schwarz oder dunkelfarbig ist, ist es nicht mehr erforderlich, die Außenflächen des Kollektorgehäuses 10 braun zu eloxieren oder in anderer Art farbig zu gestalten.

Der Dichtungsstreifen 34 bedeutet keinen erhöhten Materialaufwand, da er gleichzeitig auch die Glasscheibe 16 eindichtet, was ohnehin bei jeder Kollektorbauart erforderlich ist.

Die Demontage der gezeigten Anordnungen für beispielsweise Reparaturzwecke ist sehr einfach, da der Dichtungsstreifen 34 unter Überwindung seiner elastischen Vorspannkräfte abgehoben werden kann, wonach der Dacheindeckrahmen 12 bzw. die Verkleidung 12' durch leichtes Anbiegen entfernt werden können.

Die Fig. 9 bis 11 zeigen verschiedene Varianten von Anordnungen von Kollektorgehäusen 10 nebeneinander, wobei die oben beschriebene Struktur mit einem Dichtungsstreifen 34 förderlich ist.

Fig. 9 zeigt zwei Kollektorgehäuse 10, 10', die unter Abstand nebeneinander auf bzw. in einem Dach angeordnet sind. Die Dichtungsstreifen 34, 34' und die Rinnen 38, 38' können in der oben beschriebenen Weise unverändert eingesetzt werden, wobei statt des Dacheindeckrahmens 12 bzw. der Verkleidung 12' eine Brücke 46 aus Blech eingesetzt ist, so daß der Bereich zwischen den Kollektorgehäusen 10, 10' und auch die Kollektorgehäuse selbst abgedichtet sind, und zwar wiederum mit den oben beschriebenen Feuchtigkeits-Sammelrinnen. Die Fig. 9 zeigt auch deutlich die oben bereits anhand der Fig. 3 und 5 beschriebenen Feuchtigkeits-Sammelrinnen 39, 39' oberhalb des Blechteiles 46.

Fig. 10 zeigt eine Anordnung, bei der zwei Kollektorgehäuse 10, 10' direkt (ohne Abstand) nebeneinander angeordnet sind. Die Rinnenwände 44, 44' quetschen die Lappen 34a, 34a' zwischen sich ein, wobei eine zusätzliche Abdichtung 48 die Dichtungsstreifen 34, 34' übergreift und mit einem pfeilförmig ausgebildeten Vorsprung unter die Wände 44, 44' der Rinnen 38, 38' der Kollektorgehäuse 10, 10' greift.

Fig. 11 zeigt eine der Anordnung gemäß Fig. 10 weitgehend entsprechende Variante, wobei die zusätzliche Dichtung 48 weggelassen ist.

Beim Ausführungsbeispiel nach Fig. 12 ist die massiv ausgebildete Dichtung 48 gemäß Fig. 10 durch eine Dichtungsschiene 50 abgewandelt, die ein pilzförmiges Oberteil 50a, ein stabförmiges Halteteil 52 und ein dünnes Verbindungsteil 44 aufweist, wobei letzteres zwischen die Lappen 34a, 34a' geschoben ist.

Bei den oben beschriebenen Ausführungsbeispielen hat also der Dacheindeckrahmen 12 (Fig. 1) bzw. die Verkleidung 12' (Fig. 2) nicht nur die Funktion einer feuchtigkeitsdichten Abdichtung, sondern zusätzlich auch die Funktion, wärmeisolierendes Material aufzunehmen und so sowohl das Kollektorgehäuse als auch die gegebenenfalls innerhalb der Ausbauchung 26 verlaufende Rohrleitung gegen Wärmeverluste zu schützen. Auch wenn keine Rohrleitung im Dacheindeckrahmen 12 bzw. in der Verkleidung 12' verläuft, ist das wärmeisolierende Material 28 also von Vorteil.

Fig. 14 zeigt eine Verkleidung 12' entsprechend dem Ausführungsbeispiel nach Fig. 2, wobei an derjenigen Stelle, an der aus dem Kollektorgehäuse 10 eine Rohrleitung evtl. austreten kann, eine Öffnung vorgesehen ist, die durch eine Gummitülle 56 abgedichtet ist, wobei die Gummitülle bei Bedarf entfernt werden kann, wenn eine Rohrleitung an dieser Stelle aus der Verkleidung 12' herausgeführt werden soll. Fig. 15 zeigt einen Rohrstutzen 62, der aus einem Kollektorgehäuse 10 herausgeführt ist und einen Verbindungsflansch 60 zum Anschluß eines Rohres, das in der Zeichnungsebene von Fig. 15 nach hinten weggebogen ist und dabei unterhalb der Gummitülle 56 den am weitesten nach außen vorstehenden Bereich hat, während es anschließend weiter nach innen in Richtung auf das Kollektorgehäuse 10 gebogen ist und dann parallel zur Wand 40 des Gehäuses verläuft.

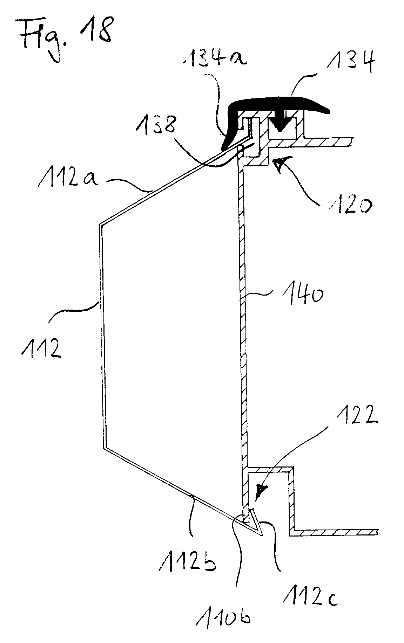

Besondere Beachtung verdient die Verbindung der Anschlußstutzen 62 des Kollektorgehäuses 10 zu den Vor- bzw. Rückläufen im Dach. Hierzu kann die Lösung gemäß den Fig. 14 und 15 dienen, andererseits aber auch eine Variante gemäß den Fig. 16 und 17, bei der die Kollektorgehäuse 10, 10' nicht nur die oben bereits beschriebenen Rohrstutzen 62, 62a ... 62g aufweisen, sondern zusätzlich stirnseitige Anschlüsse 64, 64a ... 64c zum Anschluß eines Vor- bzw. Rücklaufes 66, 68, wodurch eine Führung der Rohrleitungen unterhalb der an der Oberseite bzw. Unterseite des Kollektorgehäuses 10 angebrachten Blechabdeckungen 70, 72 ermöglicht ist.

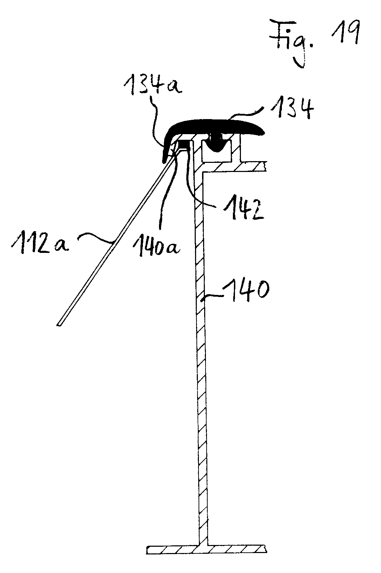

Die Fig. 18 zeigt eine Abwandlung des Ausführungsbeispieles gemäß Fig. 2 dahingehend, daß die Verkleidung 112 die gesamte Seitenwand 140 des Kollektorgehäuses überdeckt. Hierzu ist die Befestigungseinrichtung 122 am unteren Rand der Seitenwand 140 des Kollektorgehäuses angeordnet, also an der Unterkante 110b des Kollektorgehäuses. In Fig. 18 sind das Rohr 14 und das wärmeisolierende Material 28 nicht erneut dargestellt, insoweit entspricht das Ausführungsbeispiel nach Fig. 18 dem nach Fig. 2.

Das Ausführungsbeispiel nach Fig. 18 zeigt im Vergleich zu den Ausführungsbeispielen gemäß den Fig. 1 und 2 auch eine abgewandelte Befestigung der Verkleidung 112. Gemäß Fig. 18 ist ein Rand der Verkleidung 112 nach oben abgewinkelt und greift in eine Ausnehmung 138 an der Oberkante des Kollektorgehäuses. Beim Ausführungsbeispiel gemäß Fig. 18 ist also die gesamte Seitenwand 140 des Kollektorgehäuses durch die Verkleidung 112 abgedeckt, so daß nur der obere Dichtungssstreifen 134 und die Verkleidung 112 (bzw. der Dacheindeckrahmen) zu sehen sind, nicht jedoch die Wand des Kollektorgehäuses. Dies hat den Vorteil, daß die Seitenwand des Kollektorgehäuses nicht eloxiert oder sonst farblich behandelt werden muß. Weiterhin ist beim Ausführungsbeispiel gemäß Fig. 18 ein Oberteil 112a der Verkleidung 112 so abgeschrägt, daß Regenwasser ungehindert zur Seite und nach unten ablaufen kann.

Die Verkleidung 112 gemäß Fig. 18 kann besonders einfach ohne weitere Befestigungsmittel in die Nuten 122 bzw. 138 eingespannt werden, wobei ein Lappen 134a des Dichtungsstreifens 34 über das Oberteil 112a der Verkleidung 112 greift und somit Wasser vom Kollektorgehäuse ferngehalten wird.

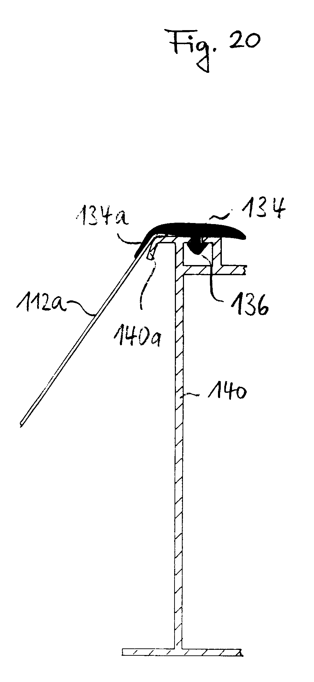

Das Ausführungsbeispiel gemäß Fig. 19 entspricht dem gemäß Fig. 18, jedoch ist die Befestigung des oberen Randes der Verkleidung 112 abgewandelt, nämlich dahingehend, daß an der Oberkante der Seitenwand 140 des Kollektorgehäuses eine nach unten gekrümmte Auskragung 140a vorgesehen ist, hinter die ein Rand der Verkleidung 112 greift. Zwischen der Verkleidung und der Auskragung 140a der Seitenwand des Kollektorgehäuses ist ein Gummistreifen 142 zur Abdichtung angeordnet. Ein Lappen 134a des Dichtstreifens 134 greift über die Verbindungsstelle zwischen Verkleidung und Seitenwand des Kollektorgehäuses, um Regenwasser sicher auf die geneigte obere Seitenwand 112a der Verkleidung 112 zu führen.

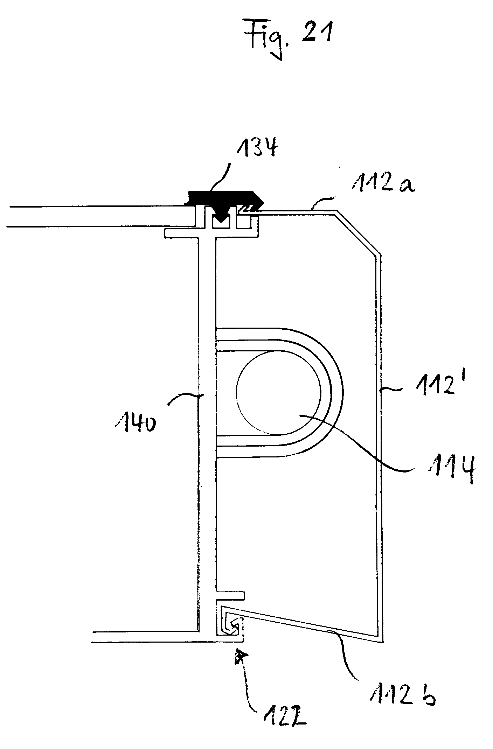

Fig. 20 zeigt eine Abwandlung des Ausführungsbeispieles nach Fig. 19 derart, daß die obere Wand 112a der Verkleidung 112 zwischen den Dichtstreifen 134 und eine Auskragung 140a am oberen Rand des Kollektorgehäuses gelegt ist.

Fig. 21 zeigt eine Abwandlung des Ausführungsbeispieles gemäß Fig. 2, wobei auch bei diesem Ausführungsbeispiel die gesamte Seitenwand 140 des Kollektorgehäuses durch die Verkleidung 112' abgedeckt ist. Die Befestigung der Verkleidung 112' an der Seitenwand 140 des Kollektorgehäuses ist der Fig. 21 unmittelbar zu entnehmen.

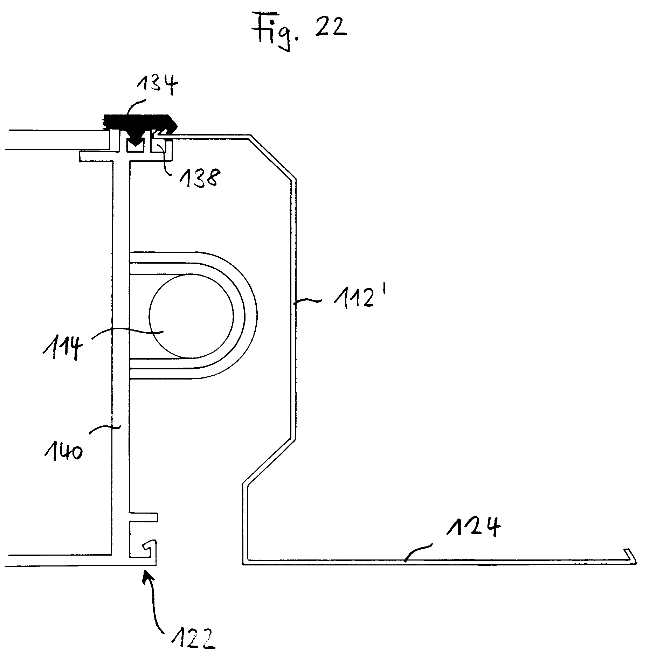

Fig. 22 zeigt eine Abwandlung des Ausführungsbeispieles gemäß Fig. 1, wobei die Einrichtung 122 zum Befestigen der Verkleidung bei einer "Aufziegel"-Montage ebenfalls am unteren Rand der Seitenwand 140 des Kollektorgehäuses angeordnet ist. Auf das Flachteil 124 kann ein Ziegel (nicht gezeigt) aufgelegt werden, entsprechend der Darstellung in Fig. 1.

## Patentansprüche

1. Sonnenkollektor-Rahmenverblendung mit einem Kollektorgehäuse (10), einem Dacheindeckrahmen (12) zur wasserdichten Montage des Sonnenkollektors in einem Dach und mit einer sich parallel zu einer Seitenwand (40) des Kollektorgehäuses (10) erstreckenden Rohrleitung (14) zum Fördern einer Wärmeträgerflüssigkeit in das oder aus dem Kollektorgehäuse (10), dadurch gekennzeichnet, daß zwischen dem Dacheindeckrahmen (12) und der Seitenwand (40) des Kollektorgehäuses (10) die Rohrleitung (14) aufgenommen ist.

2. Sonnenkollektor-Rahmenverblendung mit einem Kollektorgehäuse (10) und einer sich parallel zu einer Seitenwand (40) des Kollektorgehäuses (10) erstreckenden Rohrleitung (14) zum Fördern einer Flüssigkeit in das oder aus dem Kollektorgehäuse (10) und mit einer Verkleidung am Rand des Kollektorgehäuses, wobei das Kollektorgehäuse (10) auf einem Dach, insbesondere über den Ziegeln eines Daches, zu montieren ist, dadurch gekennzeichnet, daß die Verkleidung (12') eine Ausbauchung (26) aufweist, um die Rohrleitung (14) aufzunehmen.

3. Sonnenkollektor-Rahmenverblendung nach einem der Ansprüche 1 oder 2,
dadurch gekennzeichnet, daß zwischen der Seitenwand (40) des Kollektorgehäuses (10) und dem Dacheindeckrahmen (12) bzw. der Verkleidung (12') wärmeisolierendes Material (28) angeordnet ist.

4. Sonnenkollektor-Rahmenverblendung nach einem der vorhergehenden Ansprüche,
dadurch gekennzeichnet, daß das Kollektorgehäuse (10) nahe seiner Oberkante (10a) und gegebenenfalls nahe seiner Unterkante (10b) jeweils eine Einrichtung (20, 22) aufweist zum Befestigen des Dacheindeckrahmens (12) bzw. der Verkleidung (12').

5. Sonnenkollektor-Rahmenverblendung nach Anspruch 4,
dadurch gekennzeichnet, daß die nahe der Oberkante (10a) des Kollektorgehäuses (10) vorgesehene Einrichtung (20) zum Befestigen des Dacheindeckrahmens (12) bzw. der Verkleidung (12') eine Rinne (38) zum Sammeln von Feuchtigkeit aufweist.

6. Sonnenkollektor-Rahmenverblendung nach einem der Ansprüche 4 oder 5,
dadurch gekennzeichnet, daß die nahe der Oberkante (10a) des Kollektorgehäuses (10) vorgesehene Einrichtung (20) zum Befestigen des Dachdeckeinrahmens (12) bzw. der Verkleidung (12') eine Nut (36) aufweist zum Einklemmen eines Dichtungsstreifens (34) aus elastischem Material.
